# EUROPÄISCHE PATENTSCHRIFT

(11) **EP 1 088 733 B1**
(45) Veröffentlichungstag und Bekanntmachung des Hinweises auf die Patenterteilung: **10.12.2003**
(21) Anmeldenummer: 00250312.6
(22) Anmeldetag: 22.09.2000
(51) Int. Cl.: B61D 15/00, B61F 5/22, B60F 1/04

(54) **Kombinierter Teleskop-/Schienenkran mit Schienendrehgestell mit integriertem Neigungsausgleich**
Telescopic railway crane with bogie provided with integrated inclination compensation
Grue ferroviaire télescopique avec bogie pourvu d' une compensation d'inclinaison intégrée

(30) Priorität: 28.09.1999 DE 19948143
(43) Veröffentlichungstag der Anmeldung: 04.04.2001
(73) Patentinhaber: Gottwald Port Technology GmbH, 40597 Düsseldorf (DE)
(72) Erfinder: Sprave, Klaus, 41564 Kaarst (DE); Rode, Ralf, 41366 Schwalmtal (DE)
(74) Vertreter: Moser, Jörg Michael, Dipl.-Ing.

(56) Entgegenhaltungen:
- EP-A- 0 136 219
- DE-A- 4 142 270
- GB-A- 2 139 976
- GB-A- 2 184 409
- US-A- 3 263 628

## Beschreibung

Die Erfindung betrifft einen Kombinierten Teleskop-/Schienenkran zum Straßen- und Schieneneinsatz.

Solche Fahrzeuge für den kombinierten Einsatz auf der Straße und auf der Schiene sind bekannt. Der Vorteil dieser Geräte besteht darin, daß das Fahrzeug nach der Anfahrt auf der Straße in relativ kurzer Zeit aufgegleist werden kann, um Lasten auf der Schiene verfahren zu können. Ein typisches Gerät dieser Art ist in dem Prospekt: "Demag-Teleskopkran AC 50R, Auf Straße und Schiene" dargestellt und beschrieben.
Das bekannte Gerät kann als Schienenkran und als straßengängiger Teleskopkran zum Bergen sowohl von Schienen- wie von Straßenfahrzeugen ebenso eingesetzt werden, wie auch zur Gleisverlegung bei Straßenanfahrt. Das Gerät hat die Fahreigenschaften eines LKW und einer Straßenbahn und ist für die unterschiedlichsten Einsätze geeignet.

Das bekannte Gerät ist mit einem vorderen und einem hinteren Schienenfahrwerk ausgerüstet, das fest mit dem Fahrgestell des Kranfahrzeuges verbunden und hydraulisch anhebbar und absenkbar ist. Beim Absenken des Schienenfahrwerkes wird gleichzeitig das Kranfahrzeug angehoben, so daß die Räder den Kontakt mit dem Untergrund verlieren. Über einen Antrieb mindestens einer der Fahrwerksachsen und mittels einer Fahrsteuerung, die vom Führerhaus aus zu betätigen ist, kann das Gerät wie eine Straßenbahn gefahren werden. Nach Absenken der Hydraulik der Schienenfahrwerke kommt das Gerät wieder auf seinen Rädern zum stehen und kann nach weiterem Anheben der Schienenfahrwerke wie ein LKW verfahren werden. Die Schienenfahrwerke verbleiben dabei jederzeit am Gerät.

Die bekannte Lösung hat sich zwar bewährt, doch haben sich häufig die am Gerät fest angeordneten Schienenfahrwerke bei der Straßenfahrt und beim Arbeiten des Gerätes im Straßenbetrieb auf Baustellen als hinderlich erwiesen. Zudem stellen die Schienenfahrwerke ein Zusatzgewicht dar, das die Traglast des Gesamtgerätes schmälert. Oftmals ist es auch der Wunsch des Kunden, zwar die Möglichkeit zu haben, im Zweiwegebetrieb arbeiten zu können, doch nicht ständig die dafür vorgesehenen Einrichtungen fest am Gerät befestigt zu haben, vor allem wenn der Schienenbetrieb relativ selten ist. Andererseits wird oftmals die Forderung gestellt, das Gerät im Schienenbetrieb auch unter Last verfahren zu können, u. z . auch in überhöhten Gleisstrecken, was einen Neigungsausgleich des Gerätes erforderlich macht.

Aus der EP-A-0136219 ist ein kombinierter Teleskop-/Schienenkran zum Straßen - und Schieneneinsatz bekannt, mit einem Straßenfahrwerk und mindestens je einem vorne und hinten am Fahrgestell befestigbaren Schienenfahrwerk, das aus einem von dem Straßenfahrzeug leicht trennbaren separaten Drehgestell geringer Bauhöhe besteht, wobei zum automatischen oder manuellen verbinden eine Schnellverbindung vorgesehen ist. Das Schienenfahrgestell ist dabei über ein Kugelgelenk in der Drehgestellmitte mit einem Rahmen verbunden, der seinerseits mit dem Fahrgestell verbindbar ist.

Aus der GB - A 2184409 ist schließlich für einen Schienenkran ein Drehgestell bekannt, mit einem integrierten Neigungsausgleich.

Die Aufgabe der vorliegenden Erfindung besteht darin, straßengängige Fahrzeuge aus der Serienproduktion durch schnelle Adaption von getrennt mitgeführten Drehgestellen zu schienengängigen Zweiwegefahrzeugen umzurüsten, mit denen ein Verfahren von Lasten ggf. auch auf überhöhten Gleisstrecken möglich ist.

Die Lösung der Aufgabe erfolgt mit den Merkmalen des Patentanspruchs 1.

Die vorgeschlagene Lösung hat den Vorteil, daß die erfindungsgemäßen Drehgestelle nicht ständig mit dem Fahrzeug mitzuführen sind. Nur bei Bedarf werden die Drehgestelle, in der Regel auf Anhängern oder separaten Lastkraftfahrzeugen zum Einsatzort transportiert, um dort mit einem Kran, beispielsweise dem eigenen Kran auf die Gleise gehoben zu werden. Dort werden sie mit dem vom Boden abgehobenen Fahrzeug schnell und einfach verbunden.

Der in die Drehgestelle integrierte Neigungsausgleich ermöglicht das waagerechte Befahren überhöhter Gleise.

Die schnelle Umrüstbarkeit ist dadurch gegeben, dass das Drehgestell aus einem quer zur Fahrzeuglängsachse angeordneten biegesteifen Träger besteht, der in Drehgestellmitte über ein Kugelgelenk mit dem Drehgestellrahmen einerseits und senkrecht darüber über einen in Fahrtrichtung angeordneten Bolzen andererseits mit dem Grundrahmen verbunden ist, der seinerseits mit dem Fahrwerksrahmen des Zweiwegefahrzeuges schnell lösbar verbunden ist. Die mechanische Schnellverbindung ermöglicht, das Drehgestell in kürzester Zeit mit dem Straßenfahrzeug zu verbinden oder hiervon zu trennen. Die mit einem Autokran je vor und hinter dem Zweiwegefahrzeug auf die Gleise gestellten Drehgestelle werden per Hand an die am Zweiwegefahrzeug angebrachten Halterungen für die Steckverbindungen herangefahren und befestigt. Sofern die Drehgestelle mit Antrieb und Bremsen versehen sind, müssen zusätzlich die Energie-, Brems- und Steuerleitungen über Schnellkupplungen mit denen des Zweiwegefahrzeuges verbunden werden.

Vorzugsweise erfolgt die Verbindung des Grundrahmens mit dem Fahrwerksrahmen des Zweiwegefahrzeuges über zwei am Grundrahmen in Fahrtrichtung angeordnete und in Bohrungen des Fahrwerksrahmen einführbare Bolzen sowie zwei quer zur Fahrtrichtung liegende in am Fahrwerksrahmen befestigte Laschen einschiebbare Steckbolzen, die automatisch oder manuell steckbar und ziehbar sind. Dazu wird das Zweiwegefahrzeug über seine hydraulischen Abstützungen vertikal und horizontal so versetzt, daß die Drehgestelle in die in Längsrichtung zeigenden Bolzenaufnahmen geschoben und über die quer angeordneten Bolzen gesichert werden können.

Des weiteren ist vorgesehen, daß an beiden Enden des biegesteifen Trägers und an den Enden des Grundrahmens Festpunkte für die hydraulischen Verstellzylinder angebracht sind. Über ein elektronisches Pendel oder auch manuell sowie eine diesem nachgeschaltete Hydraulik wird das Straßenfahrzeug in überhöhten Gleiskurven waagerecht gehalten.

Vorzugsweise sind beidseitig des Kugelgelenkes im Bereich des Drehgestellrahmens Gleitplatten um die mit dem Kugelgelenk gemeinsame horizontale Drehachse drehbar gelagert, über die die Druckkräfte aus dem Drehgestell auf den Drehgestellrahmen übertragbar sind. Damit werden die aus dem Fahrzeug resultierenden Kippkräfte aufgenommen.

In einer weiteren Ausgestaltung der Erfindung sind im Grundrahmen und in dem biegesteifen Träger miteinander korrespondierende Bohrungen vorgesehen, in die Steckbolzen zur mechanische Blockierung der Neigungseinrichtung einführbar sind. Mit dieser Maßnahme kann das Drehgestell in der Mittelstellung mechanisch so arretiert werden, daß die nicht benötigte Neigungseinrichtung außer Kraft ist.

Bei dem Gerät, das als Basisfahrzeug für das Zweiwegefahrzeug dient, handelt es sich vorzugsweise um ein Straßenfahrzeug aus der Serienproduktion. Das bedeutet Senkung der Kosten für das Neufahrzeug und die Möglichkeit der nachträglichen Umrüstungen bestehender Fahrzeuge.

Insgesamt wird mit der Erfindung ein sehr kostengünstiges Zweiwegefahrzeug geschaffen, das mit Hilfe der erfindungsgemäßen Drehgestelle Lasten auch auf Gleisstrecken frei verfahren kann. Ist das Drehgestell nicht am Fahrzeug befestigt, wird das bis auf einfache Anschlußhalterungen und Steuerungen unveränderte Serienfahrzeug bestimmungsgemäß als Straßenfahrzeug eingesetzte. Der Umbau zum Schienenfahrzeug erfolgt in kürzester Zeit mit geringem Aufwand, wobei sogar der bislang bei solche Fahrzeugen unübliche Neigungsausgleich berücksichtigt ist.

Ein Ausführungsbeispiel der Erfindung ist in der Zeichnung dargestellt und wird nachfolgend beschrieben. Es zeigt:
- Fig.1: die Frontansicht des Drehgestells nach der Erfindung,
- Fig.2: eine Seitenansicht des Drehgestelles nach Fig.1,
- Fig.3: den Schnitt C-C aus Fig. 2,
- Fig.4: den Schnitt A-A aus Fig. 1
- Fig.5: den Schnitt B-B aus Fig. 1 und
- Fig.6: den Schnitt D-D aus Fig. 5

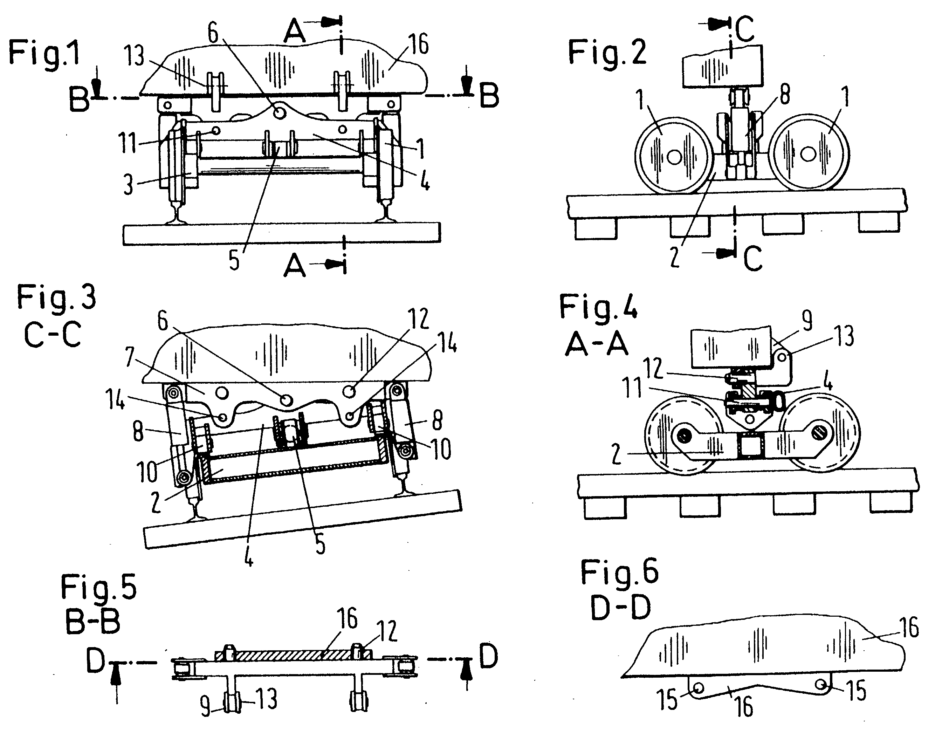

Das in Figur 1 dargestellte Drehgestell des Zweiwegefahrzeuges besteht aus zwei innen- oder außengelagerten Radsätzen 1 die über einen Rahmen 2 (Fig.2) miteinander verbunden sind. Innen- oder Außenlagerung 3 ist von der Schienenspur abhängig; es können unterschiedliche Schienenspuren berücksichtigt werden. Wie auch aus Fig.3 ersichtlich, besteht die Neigungseinrichtung aus einem quer zur Fahrtrichtung angeordneten biegesteifen Träger 4, der in Drehgestellmitte über ein Kugelgelenk 5 mit dem Drehgestellrahmen 2 und senkrecht darüber über einen in Fahrtrichtung angeordneten Bolzen 6 mit dem Grundrahmen 7 des Zweiwegefahrzeuges verbunden ist. An beiden Enden des biegesteifen Trägers 4 und an den Enden des Grundrahmens 7 sind die Festpunkte für die hydraulischen Verstellzylinder 8 angebracht. Hiermit wird über ein elektronisches Pendel oder durch manuelle Ansteuerung sowie eine diesem nachgeschaltete Hydraulik das Zweiwegefahrzeug in überhöhten Gleiskurven waagerecht gehalten.

Die aus dem Zweiwegefahrzeug resultierenden Kippkräfte werden über in der Drehachse des Kugelgelenkes 5 drehbar gelagerten, im wesentlichen horizontalen Gleitplatten 10 auf den Drehgestellrahmen 2 übertragen. Die Neigungseinrichtung kann, wenn nicht benötigt, in der Mittelstellung mechanisch durch Bolzen 11 (Fig.4) arretiert werden.

Der Grundrahmen 7 wird über zwei in Fahrtrichtung angeordnete Bolzen 12 und zwei quer zur Fahrtrichtung liegende Steckbolzen 13 mit dem Fahrwerksrahmen 16 des Straßenfahrzeugs verbunden. Die quer angeordneten Steckbolzen 13 können automatisch oder manuell gesteckt und gezogen werden.

Zum Umbau des für Straßenfahrt eingerichteten Fahrzeuges wird wie folgt vorgegangen:
Das Straßenfahrzeug, im Beispiel ein Autokran, muß in Längsrichtung, weitgehend mittig über das Gleis rangiert und mit seinen hydraulischen Abstützungen, bei gering ausgefahrenen Stützträgem, abgestützt werden. Die Drehgestelle werden mit dem Autokran von einem Anhänger gehoben und je vor und hinter dem Autokran auf die Gleise gestellt. Die Drehgestelle sind per Hand an die am Autokran angebrachten Halterungen 9 (Fig.5) für die Steckverbindungen (Bolzen 12 und Steckbolzen 13) heranzufahren.

Der Autokran wird über seine hydraulische Abstützung vertikal und horizontal so versetzt, daß die Drehgestelle mit den Bolzen 12 in die in Längsrichtung zeigenden Bolzenaufnahmen 15 geschoben (Figur.6) und über die quer angeordneten Bolzen 13 gesichert werden können. Weisen die Drehgestelle Antriebe und Bremsen auf, müssen außerdem die -nicht dargestellten- Energie-, Brems- und Steuerleitungen über Schnellkupplungen mit denen des Autokrans verbunden werden.

Das so gerüstete Straßenfahrzeug kann nun mit angehobenen Straßenrädern auf Gleisen selbsttätig verfahren oder aber geschleppt werden. In überhöhten Kurven wird das Zweiwegefahrzeug über den Neigungsausgleich automatisch oder manuell in der Waage gehalten, wird der Neigungsausgleich nicht gewünscht, kann durch Stecken der Bolzen 11 durch die miteinander korrespondierenden Bohrungen 14 das Neigungsausgleichssystem blockiert werden.

Die mechanische Schnellverbindung ermöglicht das Drehgestell in kürzester Zeit an das Straßenfahrzeug zu adaptieren oder hiervon zu trennen. Die Achsen des Fahrzeuges können angetrieben und gebremst, nicht angetrieben und nicht gebremst oder nur angetrieben bzw. nur gebremst ausgeführt werden.

## Patentansprüche

1. Kombinierter Teleskop-/Schienenkran zum Straßen- und Schieneneinsatz, mit einem Straßenfahrwerk und mindestens je einem vorne und hinten am Fahrwerksrahmen (16) des Gerätes befestigten Schienenfahrwerk zur Schienenfahrt bei vom Boden abgehobenem Straßenfahrwerk,
wobei jedes Schienenfahrwerk aus einem von dem Straßenfahrzeug trennbaren separaten Drehgestell besteht, das mittels eines Bolzens (12) und Steckbolzens (13) automatisch oder manuell mit dem Fahrwerksrahmen (16) des angehobenen Straßenfahrzeuges verbindbar ist, wobei das Drehgestell einen integrierten Neigungsausgleich (6,8) zum waagerechten Befahren überhöhter Gleise enthält und aus einem quer zur Fahrzeuglängsachse angeordneten biegesteifen Träger (4) besteht, der in Drehgestellmitte über ein Kugelgelenk (5) mit dem Drehgestellrahmen (2) einerseits und senkrecht darüber über einen in Fahrtrichtung angeordneten Bolzen (6) mit einem Grundrahmen (7) verbunden ist, der seinerseits mit dem Fahrwerksrahmen (16) des Zweiwegefahrzeuges lösbar verbunden ist.

2. Zweiwegefahrzeug nach einem der Ansprüche 1
**dadurch gekennzeichnet,**
**dass** die Verbindung des Grundrahmens (7) mit dem Fahrwerksrahmen (16) des Zweiwegefahrzeuges über zwei am Grundrahmen (7) in Fahrtrichtung angeordnete und in Bohrungen (15) des Fahrwerksrahmens (16) einführbare Bolzen (12) sowie zwei quer zur Fahrtrichtung liegende, in am Fahrwerksrahmen (16) befestigte Laschen (9) einschiebbare Steckbolzen (13) erfolgt, die automatisch oder manuell steckbar und ziehbar sind.

3. Zweiwegefahrzeug nach Anspruch 1,
**dadurch gekennzeichnet,**
**dass** das Kugelgelenk (5) als Radial-Gelenklager ausgebildet ist.

4. Zweiwegefahrzeug nach einem der Ansprüche 1 bis 3,
**dadurch gekennzeichnet,**
**dass** an beiden Enden des Trägers (4) und an den Enden des Grundrahmens (7) Festpunkte für hydraulische Verstellzylinder (8) angebracht sind.

5. Zweiwegefahrzeug nach einem der Ansprüche 1 bis 4,
**dadurch gekennzeichnet,**
**dass** beidseitig des Kugelgelenkes (5) im Bereich des Drehgestellrahmens (2) Gleitplatten (10) um die mit dem Kugelgelenk (5) gemeinsame horizontale Drehachse drehbar gelagert sind, über die die Druckkräfte aus dem Drehgestell auf den Drehgestellrahmen (2) übertragbar sind.

6. Zweiwegefahrzeug nach einem der Ansprüche 1 bis 5,
**dadurch gekennzeichnet,**
**dass** im Grundrahmen (7) und in dem Träger (4) miteinander korrespondierende Bohrungen (14) vorgesehen sind, in die Steckbolzen (11) zur mechanische Blockierung der Neigungseinrichtung einführbar sind.

## Claims

1. Combined telescopic/rail crane for use on road and rail, with a road chassis and at least one rail chassis fixed respectively at the front and at the back on the chassis frame (16) of the appliance for rail travel with the road chassis raised from the ground, each rail chassis consisting of a separate bogie which can be detached from the road vehicle and can be connected automatically or manually by means of a bolt (12) and cotter pin (13) to the chassis frame (16) of the raised road vehicle, wherein the bogie includes an integrated tilt equalisation means (6, 8) for horizontal travel on superelevated tracks and consists of a girder (4) which is resistant to bending and is disposed transversely with respect to the longitudinal axis of the vehicle, this girder being connected in the centre of the bogie by way of a ball joint (5) to the bogie frame (2) on the one hand and vertically above that it is connected by way of a bolt (6) disposed in the direction of travel to a base frame (7) which for its part is releasably connected to the chassis frame (16) of the two-way vehicle.

2. Two-way vehicle as claimed in Claim 1, **characterised in that** the connection of the base frame (7) to the chassis frame (16) of the two-way vehicle is made by way of two bolts (12) which are disposed on the base frame (7) in the direction of travel and can be inserted into bores (15) in the chassis frame (16) as well as by two cotter pins (13) which lie transversely with respect to the direction of travel and can be pushed into clips (9) fixed on the chassis frame (16), and these can be inserted and withdrawn automatically or manually.

3. Two-way vehicle as claimed in Claim 1, **characterised in that** the ball joint (5) is constructed as a radial ball and socket joint.

4. Two-way vehicle as claimed in one of Claims 1 to 3, **characterised in that** fixing points for hydraulic adjusting cylinders (8) are attached to both ends of the girder (4) and on the ends of the basic frame (7).

5. Two-way vehicle as claimed in one of Claims 1 to 4, **characterised in that** on both sides of the ball joint (5) in the region of the bogie frame (2) slide plates (10) are mounted so as to be rotatable about the horizontal axis of rotation which is common to the ball joint (5), and the pressing forces from the bogie can be transferred to the bogie frame (2) by way of the said slide plates.

6. Two-way vehicle as claimed in one of Claims 1 to 5, **characterised in that** bores (14) which correspond to one another and into which cotter pins (11) can be inserted for mechanical locking of the tilting means are provided in the base frame (7) and in the girder (4).

## Revendications

1. Grue ferroviaire télescopique combinée destinée à une utilisation sur route et sur rails, avec un mécanisme de déplacement sur route et au moins un mécanisme de déplacement sur rails qui est fixé à l'avant et à l'arrière au cadre du mécanisme de déplacement (16) de l'appareil et qui sert au déplacement sur rails lorsque le mécanisme de déplacement sur route est soulevé du sol, dans lequel chaque mécanisme de déplacement sur rail comprend un bogie distinct qu'on peut séparer du véhicule sur route et qui peut être relié automatiquement ou manuellement au cadre du mécanisme de déplacement (16) du véhicule sur route soulevé du sol au moyen d'une cheville (12) et d'une cheville embrochable (13), dans lequel le bogie est munie d'une compensation d'inclinaison (6, 8) intégrée pour parcourir à l'horizontale des voies surhaussées et comprend un support (4) résistant à la flexion qui est disposé transversalement à l'axe longitudinal du véhicule, et qui d'une part est relié avec le cadre de bogie (2) par une articulation sphérique (5) au milieu du bogie et, perpendiculairement par dessus, avec un cadre de base (7) par une cheville (6) disposée dans le sens de la marche, lequel cadre de base est de son côté relié de façon détachable au cadre du mécanisme de déplacement (16) du véhicule rail-route.

2. Véhicule rail-route selon la revendication 1, **caractérisé en ce que** la liaison du cadre de base (7) avec le cadre du mécanisme de déplacement (16) du véhicule rail-route est réalisée au moyen de deux chevilles (12) qui sont disposées sur le cadre de base (7) dans le sens de la marche et qu'on peut insérer dans des forures (15) du cadre du mécanisme de déplacement (16) ainsi que deux chevilles embrochables (13) qui sont placées transversalement au sens de la marche, qu'on peut introduire dans des éclisses (9) fixées au cadre du mécanisme de déplacement (16) et qu'on peut engager et retirer automatiquement ou manuellement.

3. Véhicule rail-route selon la revendication 1, **caractérisé en ce que** l'articulation sphérique (5) est conçue en tant qu'articulation à rotule radiale.

4. Véhicule rail-route selon l'une des revendications 1 à 3, **caractérisé en ce que** des points fixes pour des cylindres d'ajustement (8) hydrauliques sont appliqués aux deux extrémités du support (4) et aux extrémités du cadre de base (7).

5. Véhicule rail-route selon l'une des revendications 1 à 4, **caractérisé en ce que**, de chaque côté de l'articulation sphérique (5) dans la zone du cadre de bogie (2), des plaques de glissement (10) grâce auxquelles les efforts de pression peuvent être transférés du bogie au cadre de bogie (2) sont montées de façon à pouvoir tourner autour de l'axe de rotation horizontal commun à l'articulation sphérique (5).

6. Véhicule rail-route selon l'une des revendications 1 à 5, **caractérisé en ce que**, dans le cadre de base (7) et dans le support (4), on prévoit des forures (14) qui se correspondent l'une l'autre dans lesquelles on peut insérer les chevilles embrochables (11) destinées à bloquer mécaniquement l'installation d'inclinaison.
